# EUROPÄISCHE PATENTSCHRIFT

(11) **EP 2 264 327 B1**
(45) Veröffentlichungstag und Bekanntmachung des Hinweises auf die Patenterteilung: **04.01.2012**
(21) Anmeldenummer: 10180534.9
(22) Anmeldetag: 02.07.2004
(51) Int. Cl.: F16D 3/223, F16D 1/09

(54) **Anbindungssystem für eine Welle an ein Gelenk**
System for connecting a shaft to a joint
Système pour relier un arbre à une articulation

(30) Priorität: 12.09.2003 DE 10342497
(43) Veröffentlichungstag der Anmeldung: 22.12.2010
(62) Teilanmeldung aus: 04740545.1
(73) Patentinhaber: Shaft-Form-Engineering GmbH, 77756 Hausach (DE)
(72) Erfinder: Disser, Claus, 63500, Seligenstadt (DE); Niederhüfner, Manfred, 65456, Hanau (DE)
(74) Vertreter: KEIL & SCHAAFHAUSEN Patentanwälte

(56) Entgegenhaltungen:
- DE-A1- 4 033 275
- DE-U1- 29 516 626
- FR-A1- 2 712 049

## Beschreibung

Die vorliegende Erfindung betrifft ein Anbindungssystem für eine Welle an ein Gelenk, bei dem ein an dem mit dem Gelenk zu verbindenden Ende der Welle ausgebildeter Wellenzapfen in eine Ausnehmung einer Gelenkanbindung einsteckbar ist.

Das erfindungsgemäße Anbindungssystem ist bspw. bei einem Gleichlaufgelenk mit zentraler Ausnehmung anwendbar, bei dem die Gelenkanbindung durch die Innennabe des Gelenkes gebildet ist. Ein derartiges Gelenk ist aus der DE 32 27 969 C2 bekannt, bei dem eine Antriebswelle in der Bohrung des inneren Gelenkkörpers aufgenommen ist und das Drehmoment mittels einer Längsverzahnung überträgt. Ferner ist in der DE 40 33 275 C2 ein Gleichlaufdrehgelenk beschrieben, das ein Gelenkaußenteil und ein Gelenkinnenteil aufweist, wobei das Gelenkinnenteil über eine Keilverzahnung mit einer drehbaren Welle verbunden ist. Um eine näherungsweise spielfreie Verbindung zwischen der Welle und dem Gelenk zu erreichen, müssen der Wellenzapfen und die Ausnehmung der Gelenkanbindung bzw. die vorgesehene Verzahnung passgenau aneinander angepasst werden, so dass beim Einstecken des Wellenzapfens in die Ausnehmung hohe Reibungskräfte zu überwinden sind. Dies erfordert bei der Montage den Einsatz von aufwendigem Werkzeug, um die Welle genau in axialer Richtung in die Ausnehmung der Gelenkanbindung einzuschieben.

Da derartige Gleichlaufgelenke bspw. in Kraftfahrzeugen eingesetzt werden, die in einer Massenproduktion am Fließband hergestellt werden, ist eine solch aufwendige Montage mit erheblichen Nachteilen und Kosten verbunden, zumal immer die Gefahr besteht, dass die Welle nicht genau genug in axialer Richtung mit dem Gelenk verbunden wird.

Aus der FR 2 712 049 A1 ist ein Anbindungssystem bekannt, bei dem ein Wellenzapfen in eine Aufnahme einer Radnabe gesteckt wird. Der Wellenzapfen weist an seinem Einsteckende eine Steckverzahnung auf, an die sich ein konischer Abschnitt anschließt, der in einen zylindrischen Außengewindeabschnitt übergeht. Die Aufnahme besitzt auf ihrem äußeren Umfang ebenfalls einen Gewindeabschnitt. Eine Mutter, die sowohl mit dem Außengewinde auf der Welle als auch mit dem Außengewinde auf der Aufnahme verschraubt ist, sichert die Anbindung. Eine Abdichtung dieses Anbindungssystems ist nicht vorgesehen.

Es ist somit Aufgabe der vorliegenden Erfindung, eine Anbindung einer Welle an ein Gelenk zu ermöglichen, bei der die Montage vereinfacht und ein Betrieb des Gelenks ohne nennenswertes radiales Spiel ermöglicht wird.

Diese Aufgabe wird bei einem Anbindungssystem der eingangs genannten Art erfindungsgemäß mit den Merkmalen des Anspruchs 1 gelöst. Dabei bedeutet eine im Wesentlichen kraftlose Verschiebung, dass diese Verschiebung von Hand ohne zusätzliches Werkzeug vorgenommen werden kann. Dies ermöglicht eine Vormontage von Hand und trägt daher zu einer erheblichen Vereinfachung der Anbindung der Welle an das Gelenk bei. Insbesondere wird durch diese manuelle Vormontage bereits eine gute Vorausrichtung von Wellenzapfen und vorzugsweise zentraler Ausnehmung erreicht. Erst in einem zweiten Teil des Einsteckweges ist dann unter Zuhilfenahme von Werkzeug ein höherer Kraftaufwand aufzuwenden, der durch eine stärkere Reibung des Wellenzapfens in der Ausnehmung hervorgerufen wird. Aufgrund der weitreichenden Vormontage von Hand kann die Montage in dem zweiten Teil des Einsteckweges jedoch mit vergleichsweise einfachen Werkzeugen vorgenommen werden. Darüber hinaus ist die Welle durch die Vormontage in der Ausnehmung des Gelenks bereits richtig axial ausgerichtet, so dass es bei dem weiteren Einstecken zu keiner Verkantung der Welle in der Ausnehmung kommt.

Dazu ist gemäß einer vorteilhaften Ausgestaltung der Erfindung vorgesehen, dass der erste Teil des Einsteckweges mindestens etwa 50 % des gesamten Einsteckweges beträgt. Besonders bevorzugt beträgt der erste Teil des Einsteckweges sogar 60 bis 70 % des gesamten Einsteckweges. Der zweite Teil des Einsteckweges stellt die Differenz zu dem gesamten Einsteckweg dar. Je nach Gestaltung der Außenfläche des Wellenzapfens und der Innenfläche der Ausnehmung, in denen bspw. eine Verzahnung vorgesehen sein kann, kann die optimale prozentuale Aufteilung zwischen dem ersten und dem zweiten Teil des Einsteckweges erfindungsgemäß jedoch auch außerhalb des genannten Bereichs liegen.

Gemäß einer bevorzugten Ausführungsform der vorliegenden Erfindung wird die im Wesentlichen kraftlose Verschiebung dadurch erreicht, dass in dem ersten Teil des Einsteckweges radiales Spiel zwischen einem Vorderabschnitt des Wellenzapfens und einem Eingangsabschnitt der zentralen Ausnehmung besteht. Dies führt dazu, dass in diesem ersten Teil des Einsteckweges so gut wie keine Reibung zwischen dem Wellenzapfen und der Ausnehmung auftritt, so dass eine kraftlose Verschiebung des Wellenzapfens in der Ausnehmung möglich ist. In dem zweiten Abschnitt des Einsteckweges sind dann erfindungsgemäß der Wellenzapfen und die Ausnehmung passgenau zueinander ausgebildet, so dass in diesem Bereich hohe Reibungskräfte wirken, die einen hohen Kraftaufwand zum Einstecken des Wellenzapfens in die Ausnehmung erfordern und zu einer spielfreien Verbindung zwischen Welle und Gelenk führen. Dazu können die Außenfläche des Wellenzapfens und/oder die Innenfläche der zentralen Ausnehmung in aufeinander abgestimmter Weise stufig ausgebildet sein.

In einer Weiterentwicklung des Anbindungssystems kann ein radiales Spiel zwischen dem Wellenzapfen und der Ausnehmung im Verlauf des zweiten Teils des Einsteckweges stetig abnehmen. Dies führt dazu, dass der aufzuwendende Kraftaufwand in dem zweiten Teil des Einsteckweges mit der Einstecktiefe ansteigt. Dazu können die Außenfläche des Wellenzapfens und/oder die Innenfläche der zentralen Ausnehmung insbesondere im zweiten Teil des Einsteckweges konisch ausgebildet sein, wobei die Konizität von Wellenzapfen und Ausnehmung unterschiedlich sein können. So kann der Kraftaufwand genau den Erfordernissen angepasst und eine besonders gute Zentrierung der Welle in der vorzugsweise zentralen Ausnehmung des Gelenkes erreicht werden.

Um bspw. bei einem Gleichlaufdrehgelenk eine zuverlässige Kraftübertragung von der Welle auf das Gelenk sicher zu stellen, kann auf der Außenfläche des Wellenzapfens und der Innenfläche der Ausnehmung eine Profilierung zur Drehmomentübertragung vorgesehen sein, die bspw. als Verzahnung ausgebildet ist.

Vorzugsweise kann der Wellenzapfen und/oder die Ausnehmung auch einen Endanschlag aufweisen, welcher das Ende des Einsteckweges anzeigt und diesen zuverlässig begrenzt. Dazu kann die Welle an dem Übergang zum Wellenzapfen einen Flansch aufweisen, welcher nach dem Einstecken des Wellenzapfens in die zentrale Ausnehmung an der Stirnseite der Gelenkanbindung anliegt.

Um ein Herausrutschen des Wellenzapfens aus der Ausnehmung zu verhindern, welches bspw. durch Schläge auf die Gelenkanbindung oder sonstige Erschütterungen hervorgerufen werden kann, kann der Wellenzapfen erfindungsgemäß gegen eine axiale Verschiebung in der Ausnehmung festlegbar sein. Dies kann bspw. durch einen Splint, eine an der Welle befestigte Überwurfmutter, welche auf ein Außengewinde der Gelenkanbindung aufschraubbar ist, mehrere durch einen Flansch auf der Welle durchsteckbare und in einer Stirnseite der Gelenkanbindung fixierbare Schrauben oder dgl. erfolgen.

Gemäß einer weiteren Ausführungsform der vorliegenden Erfindung ist der Wellenzapfen in der Ausnehmung mittels eines Sprengrings festlegbar, welcher bspw. in einer äußeren Nut der Gelenkanbindung geführt ist und durch in der Gelenkanbindung vorgesehene Öffnungen hindurch in eine in dem Wellenzapfen ausgebildete Nut eingreift.

Ferner kann erfindungsgemäß vorgesehen sein, dass an der Kugelnabe und/oder Welle ein Angriffspunkt für ein Werkzeug vorgesehen ist. Dies kann ein Flansch, eine Nut, eine Überwurfmutter oder dgl. sein.

Ferner betrifft die vorliegende Erfindung ein Verfahren zur Anbindung einer Welle an ein Gelenk mittels des vorbeschriebenen Anbindungssystems, welches sich insbesondere dadurch auszeichnet, dass der Wellenzapfen der Welle in dem ersten Teil des Einsteckweges von Hand zur Vormontage und in dem zweiten Teil des Einsteckweges unter Verwendung eines Werkzeugs in die Ausnehmung eingesteckt wird, mit welchem der benötigte Kraftaufwand aufgebracht werden kann. Dazu kann bspw. ein Gabelschlüssel an einem Flansch der Welle oder einer Nut der Kugelnabe angreifen und diese robotergesteuert in die Gelenkanbindung einschieben oder auf den Wellzapfen aufschieben. Alternativ könnte auch eine Überwurfmutter mit einem Gabelschlüssel angezogen werden.

Weitere Merkmale, Vorteile und Anwendungsmöglichkeiten der vorliegenden Erfindung ergeben sich aus der nachfolgenden Beschreibung von Ausführungsbeispielen anhand der Zeichnung. Dabei gehören alle beschriebenen und/oder bildlich dargestellten Merkmale für sich zum Gegenstand der vorliegenden Erfindung, auch unabhängig von ihrer Zusammenfassung in den Ansprüchen oder deren Rückbezügen.

Es zeigen:
- Fig. 1: eine Welle zur Anbindung an ein schematisch im Querschnitt dar- gestelltes Gleichlaufdrehgelenk gemäß einer ersten Ausführungs- form und
- Fig. 2: eine Welle zur Anbindung an eine schematisch im Querschnitt dar- gestellte Gelenkanbindung gemäß einer zweiten Ausführungsform.

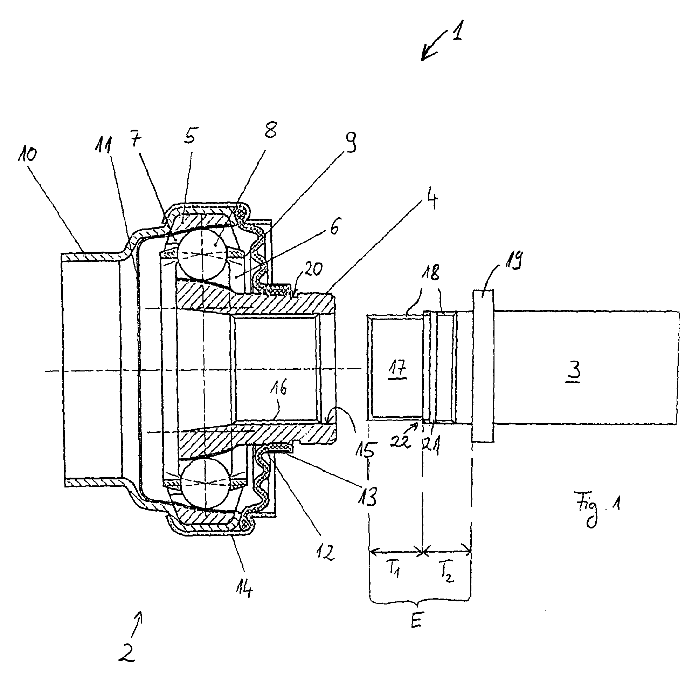

Das in Fig. 1 dargestellte Anbindungssystem 1 besteht aus einem als Drehgelenk ausgebildeten Gleichlauffestgelenk 2 und einer Welle 3 zur Anbindung an das Gelenk 2, welches eine Innennabe 4 und eine Außennabe 5 aufweist. In der Innennabe 4 und der Außennabe 5 sind einander jeweils paarweise zugeordnete Laufbahnen 6 bzw. 7 vorgesehen, in welchen Kugeln 8 aufgenommen sind. Die Kugeln 8 sind in einem Käfig 9 geführt. Hierzu weist der Käfig 9 entsprechend der Anzahl der Kugeln 8 an seinem Umfang verteilte Fenster auf.

Die Außennabe 5 ist in der dargestellten Ausführungsform von einem Mitnehmergehäuse 10 kraft- oder formschlüssig umgriffen. Zur Abdichtung des Gelenkes 2 ist in das Mitnehmergehäuse 10 ein Verschlussdeckel 11 eingesetzt, der ohne das Vorsehen zusätzlicher Dichtungselemente das Eindringen von Schmutzpartikeln in das Gelenk 2 bzw. den Verlust von Schmiermittel verhindert. Auf der gegenüberliegenden Seite der Kugeln 8 ist das Gelenk 2 durch einen Faltenbalg 12 abgedichtet, der an seinem radial inneren Rand mittels eines Binders auf der Innennabe 4 fixiert ist. Der radial äußere Rand des Faltenbalges 12 ist an einer das Mitnehmergehäuse 10 und die Außennabe 5 umgreifenden Kappe 14 mittels einer Einbördelung befestigt.

Zum Anschluss an eine getriebene oder anzutreibende Welle 3 weist die als Gelenkanbindung dienende Innennabe 4 eine zentrale Ausnehmung 15 auf, die mit einer Profilierung 16 zur Drehmomentübertragung versehen ist. Die Innennabe 4 lässt sich auf diese Weise zur Montage des Gelenks 2 auf einen Wellenzapfen 17 der Welle 3 aufstecken. Dazu ist an dem Wellenzapfen 17 eine der Profilierung 16 der Ausnehmung 15 entsprechende Profilierung 18 ausgebildet, die in die Profilierung 16 eingreift und eine Drehmomentübertragung ermöglicht. Die Profilierungen 16, 18 können dabei bspw. in Form einer Verzahnung ausgebildet sein. Ein besonderer Vorteil dieser Anordnung besteht darin, dass das Gelenk 2 vollständig fertig montiert sein kann, bevor es an die Welle 3 angebunden wird.

Der Wellenzapfen 17 wird dazu in die zentrale Ausnehmung 15 eingesteckt, bis ein an dem Übergang zwischen dem Wellenzapfen 17 und der Welle 3 ausgebildeter Flansch 19 als Endanschlag an der äußeren Stirnseite der Innennabe 4 anstößt. In dieser Position wird die Welle 3 mittels eines nicht dargestellten Sprengrings oder dgl. in axialer Richtung in der Innennabe 4 festgelegt. Dazu wird der Sprengring in eine auf der Außenseite der Innennabe 4 vorgesehene Nut 20 aufgesteckt. Die Innennabe 4 ist im Bereich der Nut 20 teilweise durchbrochen, so dass der nicht dargestellte Sprengring durch diese Durchbrechung hindurch in eine in dem Wellenzapfen 17 entsprechend ausgebildete Nut 21 eingreift und die Welle 3 gegen ein axiales Verrutschen sichert. Anstelle dieser Fixierung kann die Welle 3 erfindungsgemäß auch auf andere Weise an dem Gelenk 2 festgelegt werden. Beispielsweise kann über den Flansch 19 eine Überwurfmutter aufgesteckt sein, deren Gewinde in ein auf der Außenseite der Innennabe 4 ausgebildetes Gewinde eingreift. Alternativ dazu können in dem Flansch 19 in axialer Richtung vorgesehene Durchgangsbohrungen vorgesehen werden, die Gewindeöffnungen in der Stirnseite der Innennabe 4 entsprechen, so dass die Welle 3 an der Innennabe 4 des Gelenkes 2 angeschraubt werden kann.

Der Wellenzapfen 17 ist dabei derart an die zentrale Ausnehmung 15 angepasst, dass in einem ersten Teil T₁ des Einsteckweges E eine im Wesentlichen kraftlose Verschiebung des Wellenzapfens 17 in der Ausnehmung 15 möglich ist und in einem zweiten Teil T₂ des Einsteckweges E ein hoher Kraftaufwand für die Verschiebung des Wellenzapfens 17 in der Ausnehmung 15 aufzuwenden ist.

Dies wird dadurch erreicht, dass ein dem ersten Teil T₁ entsprechender Vorderabschnitt des zylinderförmigen Wellenzapfens 17 einen im Vergleich zum Innendurchmesser der Ausnehmung 15 kleineren Außendurchmesser aufweist.

Dadurch besteht im ersten Teil T₁ des Einsteckweges E beim Einstecken der Welle 3 ein radiales Spiel zwischen dem Wellenzapfen 17 und der Ausnehmung 15, so dass der Wellenzapfen 17 in diesem Teil ohne nennenswerte Reibungskräfte in die Ausnehmung 15 eingesteckt werden kann.

An dem Übergang zum zweiten Teil T₂ des Einsteckweges E ist in dem Wellenzapfen 17 ein Absatz 22 vorgesehen, an dem der Wellenzapfen 17 zu einem größeren Außendurchmesser übergeht. Dieser Außendurchmesser im zweiten Teil T₂ entspricht passgenau dem Innendurchmesser der zentralen Ausnehmung 15. In diesem zweiten Teil T₂ des Einsteckweges E kann der Wellenzapfen 17 daher nur noch mit einem hohen Kraftaufwand in die zentrale Ausnehmung 15 eingeschoben werden, da eine hohe Reibungskraft überwunden werden muss. Dazu kann bspw. ein nicht dargestellter Gabelschlüssel verwendet werden, der von der Seite der Welle 3 aus an dem Flansch 19 angreift und die Welle 3 in die Ausnehmung 15 eindrückt. Im Falle einer Überwurfmutter kann das Einstecken des Wellenzapfens 13 in die Ausnehmung 15 im zweiten Teil T₂ des Einsteckweges E durch Aufschrauben der Überwurfmutter auf die Innennabe 4 erfolgen. In letzterem Fall kann der Wellenzapfen 17 so weit kraftlos in die Ausnehmung 15 eingeschoben werden, bis die Überwurfmutter an dem Gewinde angreift.

Durch diese Anpassung von Wellenzapfen 17 und Ausnehmung 15 wird erreicht, dass eine im Wesentlichen kraftlose Vormontage von Hand ermöglicht wird, nach der der Wellenzapfen 17 bereits sicher in der Ausnehmung 15 geführt ist. Dadurch wird vermieden, dass bei der Kraftanwendung zum weiteren Einstecken, durch das eine spielfreie Verbindung zwischen Welle 3 und Gelenk 2 hergestellt wird, ein Verkanten von Welle 3 und Innennabe 4 auftritt.

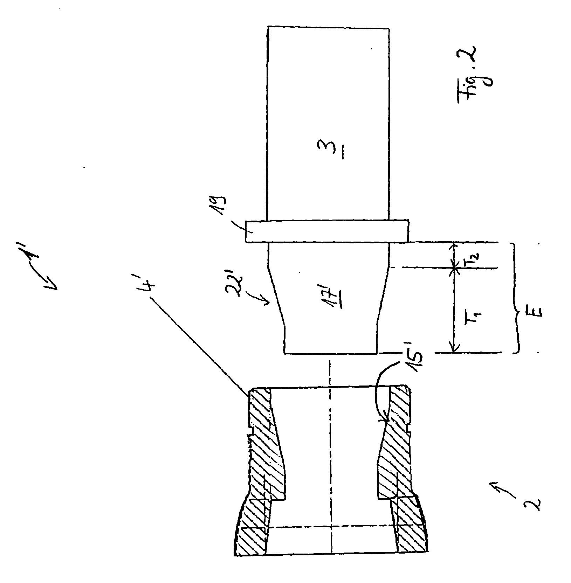

In Fig. 2 ist eine weitere Ausführungsform eines erfindungsgemäßen Anbindungssystems 1' gezeigt, wobei von dem Gelenk 2 der Einfachheit halber nur die Innennabe 4' ohne Profilierungen dargestellt ist. Diese Ausführungsform unterscheidet sich von dem zuvor beschriebenen Anbindungssystem 1 dadurch, dass auch die Innenfläche der Ausnehmung 15' an die Struktur des Wellenzapfens 17' angepasst und der Absatz 22' in dem Wellenzapfen 17' als konischer Übergang ausgebildet ist. Ansonsten können die im Zusammenhang mit dem Anbindungssystem 1 beschriebenen Merkmale auch bei dem Anbindungssystem 1' ausgebildet sein.

Bei dem Anbindungssystem 1' ist auch in einem ersten Teil T₁ des Einsteckweges E eine im Wesentlichen kraftlose Verschiebung des Wellenzapfens 17' in der Ausnehmung 15' möglich. Erst in dem zweiten Teil T₂ des Einsteckweges, in den der Wellenzapfen 17' passgenau an die Ausnehmung 15' angepasst ist, ist ein erhöhter Kraftaufwand erforderlich. Bei dieser Ausführungsform wird der Wellenzapfen 17' sowohl im vorderen als auch im hinteren Bereich spielfrei in der Ausnehmung 15' gelagert. Dies führt zu einer besonders stabilen Anbindung der Welle 3 an das Gelenk 2. Im Bereich des konisch zulaufenden Absatzes 22' kann vorgesehen sein, dass sich die Ausnehmung 15' geringfügig stärker konisch verjüngt als der Wellenzapfen 17'. Dadurch wird im Bereich des zweiten Teils T₂ des Einsteckweges E ein stetig steigender Kraftaufwand notwendig und eine besonders gute, verkantungsfreie Zentrierung der Welle 3 erreicht.

Die vorliegende Erfindung ist jedoch nicht auf die in den Ausführungsbeispielen gezeigten Gestaltungen von Wellenzapfen und Ausnehmung beschränkt. Diese kann von dem Fachmann frei den jeweiligen Anforderungen angepasst werden. So können bspw. der Wellenzapfen und/oder die Ausnehmung von ihrem jeweiligen vorderen bis zu ihrem jeweiligen hinteren Ende konisch ausgebildet sein. Diese Ausführung lässt sich besonders einfach herstellen. Auch kann anstelle des als Flansch 19 ausgebildeten Endanschlags bspw. ein entsprechender Vorsprung in der Ausnehmung vorgesehen sein.

### Bezugszeichen liste:

- 1, 1': Anbindungssystem
- 2: Gelenk, Gleichlauffestgelenk
- 3 -: Welle
- 4, 4': Gelenkanbindung, Innennabe
- 5: Außennabe
- 6: Laufbahn der Innennabe
- 7: Laufbahn der Außennabe
- 8: Kugeln
- 9: Käfig
- 10: Mitnehmergehäuse
- 11: Verschlussdeckel
- 12: Faltenbalg
- 13: Binder
- 14: Kappe
- 15, 15': Ausnehmung
- 16: Profilierung der Ausnehmung
- 17, 17': Wellenzapfen
- 18: Profilierung des Wellenzapfens
- 19: Flansch, Endanschlag
- 20: Nut
- 21: Nut
- 22, 22': Absatz

- E: Einsteckweg
- T₁: erster Teil des Einsteckweges
- T₂: zweiter Teil des Einsteckweges

## Patentansprüche

1. Anbindungssystem für eine Welle (3) an ein Kugelgleichlauffestgelenk (2) mit einer Innennabe (4) und einer Außennabe (5), bei dem ein an dem mit dem Kugelgleichlauffestgelenk (2) zu verbindenden Ende der Welle (3) ausgebildeter Wellenzapfen (17, 17') in eine Ausnehmung (15, 15') einer Gelenkanbindung (4, 4') einsteckbar ist, wobei der Wellenzapfen (17, 17') und die Ausnehmung (15, 15') derart aneinander angepasst sind, dass in einem ersten Teil (T₁) des Einsteckweges (E) eine im Wesentlichen kraftlose Verschiebung des Wellenzapfens (17, 17') in der Ausnehmung (15, 15') möglich ist und in einem zweiten Teil (T₂) des Einsteckweges (E) ein hoher Kraftaufwand für die Verschiebung des Wellenzapfens (17, 17') in der Ausnehmung (15, 15') aufzuwenden ist, wobei der Wellenzapfen (17, 17') mittels einer Überwurfmutter gegen eine axiale Verschiebung in der Ausnehmung (15, 15') festlegbar ist,
**dadurch gekennzeichnet, dass** die Außennabe (5) von einem Mitnehmergehäuse (10) kraft- und formschlüssig umgeben ist, wobei in dem Mitnehmergehäuse (10) ein das Kugelgleichlauffestgelenk (2) auf der der Welle (3) abgewandten Seite abdichtender Verschlussdeckel (11) angeordnet ist und wobei das Kugelgleichlauffestgelenk (2) auf der der Welle (3) zugewandten Seite durch einen Faltenbalg (12) abgedichtet ist, der an seinem radial inneren Rand mittels eines Binders auf der Innennabe (4) fixiert ist und dessen radial äußerer Rand an einer das Mitnehmergehäuse (10) und die Außennabe (5) umgreifenden Kappe (14) mittels einer Einbördelung befestigt ist.

2. Aribindungssystem nach Anspruch 1, **dadurch gekennzeichnet, dass** der erste Teil (T₁) des Einsteckweges (E) mindestes etwa 50 %, vorzugsweise 60 % bis 70 %, des gesamten Einsteckweges (E) beträgt.

3. Anbindungssystem nach Anspruch 1 oder 2, **dadurch gekennzeichnet, dass** in dem ersten Teil (T₁) des Einsteckweges (E) ein radiales Spiel zwischen einem Vorderabschnitt des Wellenzapfens (17, 17') und einem Eingangsabschnitt der Ausnehmung (15, 15') besteht und dass in dem zweiten Teil (T₂) des Einsteckweges (E) der Wellenzapfen (17, 17') und die Ausnehmung (15, 15') passgenau zueinander ausgebildet sind.

4. Anbindungssystem nach einem der vorhergehenden Ansprüche, **dadurch gekennzeichnet, dass** ein radiales Spiel zwischen dem Wellenzapfen (17, 17') und der Ausnehmung (15, 15') im Verlauf des zweiten Teils (T₂) des Einsteckweges (E) stetig abnimmt.

5. Anbindungssystem nach einem der vorhergehenden Ansprüche, **dadurch gekennzeichnet, dass** auf der Außenfläche des Wellenzapfens (17, 17') und der Innenfläche der Ausnehmung (15, 15') eine Profilierung (16, 18) zur Drehmomentübertragung vorgesehen ist.

6. Anbindungssystem nach einem der vorhergehenden Ansprüche, **dadurch gekennzeichnet, dass** der Wellenzapfen (17, 17') und/oder die Ausnehmung (15, 15') einen Endanschlag (19) aufweist.

7. Anbindungssystem nach Anspruch 6, **dadurch gekennzeichnet, dass** die Welle (3) an dem Übergang zum Wellenzapfen (17, 17') einen Flansch (19) aufweist, welcher nach dem Einstecken des Wellenzapfens (17, 17') in die Ausnehmung (15, 15') an der Stirnseite der Gelenkanbindung (4, 4') anliegt.

8. Anbindungssystem nach einem der vorhergehenden Ansprüche, **dadurch gekennzeichnet, dass** an der Welle (3) und/oder an der Gelenkanbindung (4, 4') ein Angriffspunkt für ein Werkzeug vorgesehen ist.

## Claims

1. A connection system for a shaft (3) on a constant velocity fixed ball joint (2) with an inner hub (4) and an outer hub (5), with which a shaft journal (17, 17') formed on the end of the shaft (3) to be connected with the constant velocity fixed ball joint (2) can be inserted into a recess (15, 15') of a joint connection (4, 4'), wherein
the shaft journal (17, 17') and the recess (15, 15') are matched to one another such that in a first part (T₁) of the insertion path (E) an essentially zero-force displacement of the shaft journal (17, 17') in the recess (15, 15') is possible, and in a second part (T₂) of the insertion path (E) a high level of force is to be applied for the displacement of the shaft journal (17, 17') in the recess (15, 15'), wherein
the shaft journal (17, 17') can be fixed by means of a lock nut against any axial displacement in the recess (15, 15'),
**characterised in that** the outer hub (5) is surrounded by a driver housing (10) in a force and form fit, wherein
in the driver housing (10) a sealing cover (11) is arranged, sealing the constant velocity fixed ball joint (2) on the side facing away from the shaft (3), and wherein
the constant velocity fixed ball joint (2) on the side facing towards the shaft (3) is sealed by means of a bellows (12), which is fixed on its radially inner edge by means of a binding agent on the inner hub (4), and whose radially outer edge is attached to a cap (14) encompassing the driver housing (10) and the outer hub (5) by means of a indent flange section.

2. The connection system in accordance with Claim 1,
**characterised in that** the first part (T₁ of the insertion path (E) amounts to at least some 50 %, preferably 60 % to 70 %, of the whole insertion path (E).

3. The connection system in accordance with Claim 1 or 2,
**characterised in that** in the first part (T₁) of the insertion path (E) a radial clearance exists between a forward section of the shaft journal (17, 17') and an entry section of the recess (15, 15'), and that in the second part (T₂) of the insertion path (E) the shaft journal (17, 17') and the recess (15, 15') are formed such that they are an exact fit with one another.

4. The connection system in accordance with one of the preceding claims,
**characterised in that** a radial clearance between the shaft journal (17, 17') and the recess (15, 15') steadily reduces in the course of the second part (T₂) of the insertion path (E).

5. The connection system in accordance with one of the preceding claims,
**characterised in that** on the outer surface of the shaft journal (17, 17') and the inner surface of the recess (15, 15') profiling (16, 18) is provided for purposes of torque transfer.

6. The connection system in accordance with one of the preceding claims,
**characterised in that** the shaft journal (17, 17') and/or the recess (15, 15') has an end stop (19).

7. The connection system in accordance with Claim 6,
**characterised in that** the shaft (3) has a flange (19) at the point of transition to the shaft journal (17, 17'), which after the insertion of the shaft journal (17, 17') into the recess (15, 15') abuts against the end face of the joint connection (4, 4').

8. The connection system in accordance with one of the preceding claims,
**characterised in that** a purchasing point for a tool is provided on the shaft (3) and/or on the joint connection (4, 4').

## Revendications

1. Système de liaison d'un arbre (3) à une articulation sphérique fixe de synchronisation (2) comprenant un moyeu interne (4) et un moyeu externe (5), dans lequel un tourillon de l'arbre (17, 17') formé sur une extrémité de l'arbre (3), à relier à l'articulation sphérique fixe de synchronisation (2), peut être enfiché dans un évidement (15, 15') d'une liaison articulée (4, 4'), sachant que le tourillon de l'arbre (17,17') et l'évidement (15, 15') sont ainsi adaptés l'un à l'autre, que dans une première partie (T₁) du trajet d'enfichage (E), une poussée essentiellement sans force du tourillon de l'arbre (17,17') dans l'évidement (15, 15') est possible, et dans une deuxième partie (T₂) du trajet d'enfichage (E), il faut appliquer une force plus élevée pour pousser le tourillon de l'arbre (17, 17') dans l'évidement (15, 15'), sachant que le tourillon de l'arbre (17, 17') peut être immobilisé contre une poussée axiale dans l'évidement (15, 15') au moyen d'un écrou-raccord, ;
**caractérisé en ce que** le moyeu externe (5) est entouré par adhérence des forces et complémentarité de forme par un boitier d'entraîneur (10), sachant qu'est disposé dans le boitier d'entraîneur (10) un couvercle de fermeture (11) étanchéifiant l'articulation sphérique fixe de synchronisation (2) sur le côté détourné de l'arbre (3), et sachant que l'articulation sphérique fixe de synchronisation (2) sur le côté tourné vers l'arbre (3), est étanchéifiée par un soufflet (12) qui est fixé sur le moyeu interne (4) sur son bord intérieur radial au moyen d'un lieur, et dont le bord extérieur radial est fixé au moyen d'un sertissage sur un bouchon (14) entourant le boitier d'entraîneur (10) et le moyeu externe (5).

2. Système de liaison selon la revendication 1, **caractérisé en ce que** la première partie (T₁) du trajet d'enfichage (E) fait au moins environ 50%, de préférence 60% à 70% du trajet d'enfichage (E) total.

3. Système de liaison selon la revendication 1 ou 2, **caractérisé en ce qu'**il y a un jeu radial dans la première partie (T₁) du trajet d'enfichage (E), entre une section avant du tourillon de l'arbre (17, 17') et une section d'entrée de l'évidement (15, 15'), et que dans la deuxième partie (T₂) du trajet d'enfichage (E), le tourillon de l'arbre (17, 17') et l'évidement (15, 15') sont adaptés avec précision l'un à l'autre.

4. Système de liaison selon l'une des revendications précédentes, **caractérisé en ce qu'**un jeu radial entre le tourillon de l'arbre (17, 17') et l'évidement (15, 15') diminue continuellement dans le tracé de la deuxième partie (T₂) du trajet d'enfichage (E).

5. Système de liaison selon l'une des revendications précédentes, **caractérisé en ce qu'**un profilé (16, 18) est prévu sur la face extérieure du tourillon de l'arbre (17, 17') et la face intérieure de l'évidement (15, 15') pour transmettre le couple de rotation.

6. Système de liaison selon l'une des revendications précédentes, **caractérisé en ce que** le tourillon de l'arbre (17, 17') et/ou l'évidement (15, 15') présente(nt) une butée d'extrémité (19).

7. Système de liaison selon la revendication 6, **caractérisé en ce que** l'arbre (3) présente, sur la transition vers le tourillon de l'arbre (17, 17'), une bride (19) qui repose sur le côté avant de la liaison articulée (4, 4') après l'enfichage du tourillon de l'arbre (17, 17') dans l'évidement (15, 15_{'}).

8. Système de liaison selon l'une des revendications précédentes, **caractérisé en ce qu'**un point d'attaque pour un outil est prévu sur l'arbre (3) et/ou sur la liaison articulée (4, 4').
